# FASCICULE DE BREVET EUROPEEN

(11) **EP 2 475 533 B1**
(45) Date de publication et mention de la délivrance du brevet: **30.07.2014**
(21) Numéro de dépôt: 10768994.5
(22) Date de dépôt: 08.09.2010
(51) Int. Cl.: B60B 35/12, B62D 21/11

(54) **ESSIEU MODULAIRE POUR TRAIN ROULANT DE VEHICULE, NOTAMMENT POUR VEHICULE AUTOMOBILE**
MODULARE FAHRZEUGACHSE, INSBESONDERE FÜR KRAFTFAHRZEUGE
MODULAR AXLE FOR THE RUNNING GEAR OF A VEHICLE, PARTICULARLY A MOTOR VEHICLE

(30) Priorité: 11.09.2009 FR 0956276
(43) Date de publication de la demande: 18.07.2012
(73) Titulaire: Peugeot Citroën Automobiles SA, 78140 Vélizy-Villacoublay (FR)
(72) Inventeur: POUILLAUDE, Eric, F-91400 Orsay (FR)
(86) Numéro de dépôt international: PCT/FR2010/051870
(87) Numéro de publication internationale: WO 2011/030057

(56) Documents cités:
- EP-A1- 0 530 594
- EP-A1- 0 678 441
- EP-A1- 1 625 955
- WO-A1-97/42047
- WO-A1-2004/041564
- DE-A1-102004 022 242

## Description

La présente invention concerne un essieu d'un train roulant avant ou arrière d'un véhicule automobile, qui supporte à ses extrémités les roues de ce train ; elle concerne aussi un procédé d'assemblage de l'essieu, ainsi qu'un véhicule automobile équipé de cet essieu.

Les véhicules automobiles peuvent disposer d'un train avant ou arrière, comprenant un essieu reliant les deux côtés du véhicule, qui comporte à chaque extrémité un ensemble mobile comprenant des bras de suspension supportant le pivot de la roue. L'essieu qui peut aussi être appelé traverse, peut recevoir de plus divers organes comme un combiné de suspension, un boîtier de direction du véhicule, une motorisation comprenant par exemple un moteur thermique ou une machine électrique, ainsi que divers accessoires.

L'essieu forme un ensemble rigide supportant généralement les organes mécaniques soumis à des efforts importants. Cet essieu est lui-même fixé sous la caisse du véhicule par plusieurs points de fixations répartis de chaque côté de cette caisse, pour équilibrer les efforts importants à transmettre.

Les dimensions de l'essieu donnent à la fois un certain écartement des deux ensembles mobiles latéraux supportant les roues, et un certain écartement de ses points de fixation à la caisse du véhicule. Les caractéristiques géométriques du train roulant, en particulier la voie ou distance transversale entre les deux roues, et l'entraxe transversal des fixations, dépendent donc des dimensions de cet essieu.

Il est par ailleurs connu de réaliser des familles de véhicules qui peuvent utiliser une plateforme commune ou proche, sur laquelle sont adaptés différents types de carrosserie répondant à des styles différents ou à des usages variés, et comportant des caractéristiques géométriques spécifiques des trains roulants. Chaque type de carrosserie peut être produit en petite ou moyenne série, pour répondre à des demandes variées.

Cette méthode permet de réaliser des plateformes en grande série, comprenant notamment des organes mécaniques standards comme la motorisation ou les trains roulants, qui sont produits à des coûts intéressants grâce à des investissements importants dans des moyens de production automatisés, tout en proposant des véhicules diversifiés.

Un problème qui se pose alors est que pour réaliser des trains roulants comportant différentes voies, ou pour adapter ces trains roulants sur des types de carrosserie comprenant des distances différentes entre les points de fixation, il faut réaliser à chaque fois un essieu comprenant des dimensions spécifiques.

La multiplication des modèles de véhicules conduit à augmenter les variétés d'essieux qui sont produits chacun avec des séries plus petites, ce qui est plus onéreux à fabriquer, plus compliqué à gérer et demande des espaces plus grand pour préparer et stocker les sous-ensembles.

Une solution connue pour réaliser un essieu modulaire de train roulant, présentée notamment par le document FR-A1-2866305, comporte des sous-ensembles latéraux supportant les bras de suspension, reliés par une poutre transversale qui peut être montée dans deux sens différents. Cette solution permet d'utiliser une poutre standard pour suivant son sens de montage, dégager des espaces différents adaptés au type de véhicule à produire, et permettant le passage de composant mécaniques.

Les sous-ensembles étant fixés dans les deux cas de montage aux extrémités de la poutre, l'écartement entre ces sous-ensembles n'est pas modifié par le sens de montage de cette poutre, et cette solution ne permet pas de modifier la voie du train roulant, ni la position de ses points de fixation.

Une solution connue pour réaliser un essieu modulaire de train routant selon le préambule, présentée notamment par le document DE-A1-10 2004 022 242, concerne un essieu de train roulant fixée à la caisse d'un véhicule dont chaque extrémité est constituée d'un sous-ensemble recevant un ensemble mobile supportant une roue de ce train roulant, et des supports de fixation à la caisse du véhicule, les sous-ensembles d'extrémité sont reliés entre eux par des éléments de liaison transversaux. L'essieu comporte des moyens permettant de réaliser à partir des mêmes sous-ensembles d'extrémité, différents écartements de ces sous-ensembles, ainsi que différents positionnements des supports de fixation.

La présente invention a notamment pour but d'éviter ces inconvénients de la technique antérieure, et de proposer un essieu de train roulant de véhicule comportant des éléments modulaires permettant de manière simple et économique, de réaliser différentes dimensions d'essieu.

Elle propose à cet effet un essieu de train roulant fixé à la caisse d'un véhicule, notamment pour véhicule automobile, conformément à l'objet de la revendication 1.

Un avantage de l'essieu selon l'invention, est que l'on peut réaliser des sous-ensembles d'extrémité standards en grande série et de manière économique, tout en permettant d'adapter l'essieu à différents types de véhicule, comprenant notamment des voies ainsi que des distances transversales entre les fixations de l'essieu variées pour chacun de ces types.

De plus, l'essieu selon l'invention peut comporter une ou plusieurs des caractéristiques suivantes, qui peuvent être combinées entre elles.

Avantageusement, les éléments de liaison transversaux comportent des tubes de longueur adaptée disposés transversalement, qui relient les sous-ensembles d'extrémité.

Chaque extrémité des tubes transversaux de liaison de longueur adaptée, peut s'ajuster sur un dispositif d'ancrage intégré au sous-ensemble d'extrémité, qui permet un coulissement latéral lors de l'assemblage.

Chaque sous-ensemble d'extrémité peut comporter deux faces transversales avant et arrière, intégrant chacune des dispositifs d'ancrage, soit permettant un ajustement direct de l'extrémité d'un tube transversal de liaison, soit comportant deux pattes cintrées entre lesquelles s'ajuste l'extrémité du tube transversal de liaison.

Selon une application, les tubes transversaux de liaison comportent des supports permettant de recevoir entre ces tubes, une machine électrique de motorisation du train roulant.

Les supports de fixation peuvent comprendre chacun deux tôles embouties soudées entre elles formant un corps creux limité par deux plans sensiblement horizontaux, constituant le rail rectiligne transversal.

L'invention a aussi pour objet un procédé d'assemblage d'un essieu tel que décrit précédemment, le procédé comprenant les étapes suivantes : on dispose les sous-ensembles d'extrémité dans un gabarit de manière à ajuster précisément leur écartement en adaptant la longueur des tubes de liaison, et en faisant coulisser leurs extrémités dans les dispositifs d'ancrage de ces tubes, et à ajuster latéralement les supports de fixation grâce au coulissement transversal possible de leur forme sur les sous-ensembles d'extrémité, et ensuite en ce que l'on soude ensemble ces différents composants.

L'invention a de plus pour objet un véhicule automobile disposant d'un train roulant comprenant un essieu, qui comporte l'une quelconque des caractéristiques précédentes.

Selon une application, le véhicule automobile comporte une machine électrique de traction intégrée dans l'essieu d'un train roulant.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est un schéma d'un essieu de train roulant selon l'invention ; et
- la figure 2 est une vue en perspective d'un essieu d'un train arrière selon l'invention, comprenant quatre tubes formant les éléments de liaison transversaux.

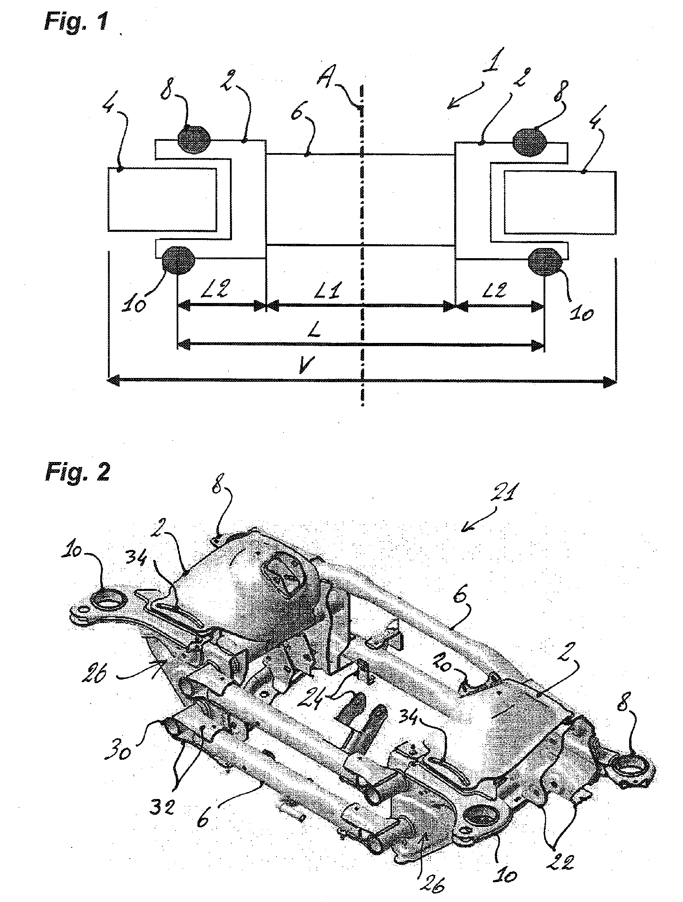

La figure 1 présente un essieu 1 d'un train roulant, symétrique suivant l'axe longitudinal A du véhicule, et comportant à chaque extrémité un sous ensemble 2 formant schématiquement une fourche tournée vers l'extérieur.

La fourche formée par chaque sous-ensemble 2, reçoit à l'intérieur un ensemble mobile 4 comprenant des bras de suspension supportant un pivot qui guide en rotation une des roues non représentée du train roulant. Les bras de suspension permettent un débattement de la roue du train roulant suivant une direction sensiblement verticale, lors du travail de la suspension.

La distance transversale entre le plan médian de chaque roue, constitue la voie V du train roulant.

Les deux sous-ensembles d'extrémité 2 sont reliés par un élément de liaison transversal 6 donnant un écartement L1, qui assure une liaison rigide entre ces sous-ensembles tout en maintenant un écartement défini.

Chaque sous-ensemble d'extrémité 2, comporte un support de fixation avant 8 et un support de fixation arrière 10, qui permettent de fixer l'essieu 1 à la caisse du véhicule non représentée. On obtient ainsi par l'écartement latéral et longitudinal des fixations, une liaison très stable qui permet de transmettre des efforts importants entre les roues de ce train et la caisse du véhicule.

La distance latérale entre les supports de fixation arrière 10 a pour valeur L, qui est la somme de l'écartement L1 donné par la liaison transversale 6, et de deux dimensions L2 propres aux sous-ensembles d'extrémité 2.

On notera que les dimensions L et L2 peuvent être différentes selon qu'il s'agit des supports de fixation avant, ou des supports de fixation arrière.

L'essieu 1 comporte de plus un premier moyen permettant à partir des mêmes sous-ensembles d'extrémité 2, de les relier avec des liaisons transversales 6 donnant différents écartement L1, et un deuxième moyen permettant de disposer les supports de fixation avant 8 et arrière 10, à des positions latérales L2 différentes par rapport à ces sous-ensembles d'extrémité.

De cette manière, on peut suivant le type de véhicule à produire, régler l'écartement L1 donné par la liaison transversale 6, puis ensuite régler les dimensions L2 sur chaque sous-ensemble d'extrémité 2, de manière à pouvoir monter l'essieu sur différents types de carrosserie, quelle que soit la voie V choisie et la distance transversale L entre les supports de fixation.

En particulier on peut sur une même plateforme, augmenter la voie V en modifiant l'écartement L1, puis diminuer les distances L2 des supports de fixation 10 et 8 pour retrouver un même écartement L latéralement entre les fixations sur la caisse.

La figure 2 présente un essieu arrière 21 conçu suivant le principe présenté figure 1, réalisé en mécano-soudure et comprenant des sous-ensembles d'extrémité 2 comportant chacun sur une tôle supérieure, une fixation 20 d'un combiné de suspension.

Chaque sous-ensemble d'extrémité 2 comporte de plus tournées vers l'extérieur, deux paires de tôles 22 transversales, sensiblement parallèles et disposées verticalement, formant deux chapes avant et arrière recevant à l'intérieur des bras de suspension non représentés, qui peuvent pivoter. Les bras de suspension ainsi que le pivot de roue qu'ils supportent, forment de chaque côté de l'essieu 21 un ensemble mobile supportant la roue.

Chaque sous-ensemble d'extrémité 2 comporte deux faces transversales avant et arrière 26 sensiblement verticales, intégrant chacune des dispositifs d'ancrage 30.

Chaque dispositif d'ancrage 30 des faces avant 26, formant un tube longitudinal, reçoit par soudure des pattes supérieure et inférieure 32 sensiblement horizontales, qui sont tournées vers l'axe longitudinal du véhicule. Transversalement, les pattes 32 comportent une extrémité extérieure plate qui vient s'ajuster sur une génératrice du dispositif d'ancrage 30 tubulaire pour la soudure, et une partie intérieure cintrée suivant un arc de cercle, de manière à former avec l'autre patte du même dispositif d'ancrage, une cavité pouvant recevoir de manière ajustée l'extrémité d'un tube transversal de liaison 6.

Chaque dispositif d'ancrage 30 des faces arrière 26, résulte directement des formes embouties des deux tôles 22 formant une chape, et peut recevoir de manière ajustée l'extrémité d'un tube transversal de liaison 6, tout en permettant un petit coulissement transversal lors de l'assemblage.

Les tubes de liaisons 6 sont sensiblement rectilignes, et comprennent une section circulaire qui est légèrement modifiées par endroit. Les quatre tubes transversaux de liaison 6, forment les arrêtes d'un parallélépipède rectangle, dont les côtés sont formés par les sous-ensembles d'extrémité 2.

Certains de ces tubes transversaux de liaison 6, comportent des supports 24 recevant entre les tubes une machine électrique non représentée, d'entraînement des roues du train roulant.

Avantageusement pour l'assemblage de l'essieu 21, on dispose les sous-ensembles d'extrémité 2 dans un gabarit de soudage, de manière à ajuster précisément leur écartement L1 en faisant coulisser les extrémités des tubes transversaux de liaison 6 entre les pattes 32 des tubes d'ancrage 30, ce qui permet de s'affranchir des dispersions de longueur de ces tubes transversaux.

De plus, l'écartement latéral L1 entre les sous-ensembles d'extrémité 2 peut être facilement adapté, soit pour une petite variation en conservant les mêmes tubes transversaux de liaison 6, avec un coulissement de leurs extrémités entre les pattes 32 des dispositifs d'ancrage 30, soit pour une variation plus importante de l'écartement, avec une mise à longueur différente de ces tubes transversaux.

On constitue ainsi de manière simple un essieu 21 formant un caisson relativement léger et très rigide, les tubes transversaux de liaison 6 étant reportés aux angles de ce caisson. De plus, de manière économique on peut modifier l'écartement L1 entre les sous-ensembles d'extrémités 2, par une mise à longueur des tubes transversaux de liaison 6.

Les quatre tubes transversaux de liaison 6 dégagent un espace intérieur dans l'essieu 21, qui est avantageusement utilisé pour intégrer dans cet essieu la machine électrique d'entraînement des roues de ce train arrière.

Les supports de fixation avant 8 ou arrière 10, comportent chacun deux tôles embouties soudées entre elles formant un corps creux limité par deux plans sensiblement horizontaux constituant une lame rectiligne transversale. Un perçage vertical traversant les deux épaisseurs de tôle, reçoit une liaison élastique comprenant une vis de serrage sur la caisse du véhicule.

Lors de l'assemblage, un rail de guidage de chaque support de fixation avant 8 et arrière 10, peut coulisser dans une rainure rectiligne transversale 34 des sous-ensemble d'extrémité 2, pour mettre ces supports dans différentes positions latérales quand ils sont disposés sur le gabarit de soudage. Avec des composants standards et de manière économique, on ajuste ainsi simplement la longueur L2 positionnant latéralement ces supports de fixations 8, 10.

Le gabarit de soudage ainsi que le dispositif de soudure lui-même, peuvent avantageusement être robotisés pour effectuer automatiquement sur la ligne de fabrication d'essieux 21, les réglages permettant de produire les configurations variées de ces essieux, à partir d'un nombre de composants réduit.

Ce procédé de fabrication simplifie le stockage des composants, réduit la place nécessaire ainsi que les coûts de production. On peut réaliser différents types de véhicules comportant des caractéristiques géométriques variées du train avant ou arrière, de manière économique.

Ce procédé de fabrication d'un essieu modulaire, convient particulièrement pour produire des véhicules hybrides ou des véhicules électriques, comprenant une machine électrique intégrée dans le train arrière.

## Revendications

1. Essieu de train roulant fixée à la caisse d'un véhicule, notamment pour véhicule automobile, dont chaque extrémité est constituée d'un sous-ensemble (2) recevant un ensemble mobile (4) supportant une roue de ce train roulant, et des supports de fixation (8, 10) à la caisse du véhicule, les sous-ensembles d'extrémité (2) étant reliés entre eux par des éléments de liaison transversaux (6), ledit essieu (1, 21) comportant des moyens permettant de réaliser à partir des mêmes sous-ensembles d'extrémité (2), différents écartements de ces sous-ensembles, ainsi que différents positionnements des supports de fixation (8, 10), **caractérisé en ce que** les supports de fixation (8, 10) comprennent chacun un rail qui pour leur assemblage, s'appuie tout en pouvant coulisser transversalement, dans une rainure (34) correspondante de leur sous-ensemble d'extrémité (2).

2. Essieu de train roulant selon la revendication 1, **caractérisé en ce que** les éléments de liaison transversaux comportent des tubes (6) de longueur adaptée disposés transversalement, qui relient les sous-ensembles d'extrémité (2).

3. Essieu de train roulant selon la revendication 2, **caractérisé en ce que** chaque extrémité des tubes transversaux de liaison (6) de longueur adaptée, s'ajuste sur un dispositif d'ancrage (30) intégré au sous-ensemble d'extrémité (2), qui permet un coulissement latéral lors de l'assemblage.

4. Essieu de train roulant selon la revendication 3, **caractérisé en ce que** chaque sous-ensemble d'extrémité (2) comporte des faces transversales avant et arrière (26), qui intègrent chacune des dispositifs d'ancrage (30), soit permettant un ajustement direct de l'extrémité d'un tube transversal de liaison (6), soit comportant deux pattes cintrées (32) entre lesquelles s'ajuste l'extrémité du tube transversal de liaison (6).

5. Essieu de train roulant selon l'une quelconque des revendications 2 à 4, **caractérisé en ce que** les tubes transversaux de liaison (6), comportent des supports (24) permettant de recevoir entre ces tubes, une machine électrique de motorisation du train roulant.

6. Essieu de train roulant selon l'une des revendications 1 à 5, **caractérisé en ce que** les supports de fixation (8, 10) comprennent chacun deux tôles embouties soudées entre elles formant un corps creux limité par deux plans sensiblement horizontaux, constituant le rail transversal.

7. Procédé d'assemblage d'un essieu de train roulant selon l'une quelconque des revendications 2 à 6, **caractérisé en ce qu'**on dispose les sous-ensembles d'extrémité (2) dans un gabarit de manière à ajuster précisément leur écartement (L1) en adaptant la longueur des tubes de liaison (6), et à ajuster latéralement les supports de fixation (8, 10) grâce au coulissement transversal possible de leur forme sur les sous-ensembles d'extrémité, et ensuite **en ce que** l'on soude ensemble ces différents composants.

8. Véhicule automobile comportant un train roulant comprenant un essieu (1, 21) suivant l'une quelconque des revendications 1 à 6.

9. Véhicule automobile selon la revendication 8, **caractérisé en ce qu'**il comporte une machine électrique de traction intégrée dans l'essieu (1, 21) de train roulant.

## Patentansprüche

1. Fahrzeugachse, die an dem Aufbau eines Fahrzeugs befestigt ist, insbesondere für Kraftfahrzeug, deren Enden jeweils aus einer Unterbaugruppe (2) bestehen, die eine bewegliche Baugruppe (4), die ein Rad dieser Fahrzeugsachse trägt, aufnimmt, und Träger (8, 10) zum Befestigen an dem Aufbau des Fahrzeugs, wobei die Endunterbaugruppen (2) untereinander durch Querverbindungselemente (6) verbunden sind, wobei die Achse (1, 21) Mittel aufweist, die es erlauben, ausgehend von diesen Endunterbaugruppen (2) unterschiedliche Abstände zwischen diesen Unterbaugruppen sowie unterschiedliche Positionierungen der Befestigungsträger (8, 10) herzustellen, **dadurch gekennzeichnet, dass** die Befestigungsträger (8, 10) jeweils eine Schiene aufweisen, die für ihr Zusammenfügen in einer entsprechenden Rille (34) ihrer Endunterbaugruppe (2) aufliegt und gleichzeitig quer gleiten kann.

2. Fahrzeugachse nach Anspruch 1, **dadurch gekennzeichnet, dass** die Querverbindungselemente Rohre (6) mit angepasster Länge aufweisen, die quer angeordnet sind, die die Endunterbaugruppen (2) verbinden.

3. Fahrzeugachse nach Anspruch 2, **dadurch gekennzeichnet, dass** sich jedes Ende der Querverbindungsrohre (6) mit angepasster Länge auf eine Verankerungsvorrichtung (30) passt, die in die Endunterbaugruppe (2) integriert ist, die ein seitliches Gleiten beim Zusammenfügen erlaubt.

4. Fahrzeugachse nach Anspruch 3, **dadurch gekennzeichnet, dass** jede Endunterbaugruppe (2) eine vordere und eine hintere Querseite (26) aufweist, die jeweils Verankerungsvorrichtungen (30) integrieren, die entweder ein direktes Justieren des Endes eines Querverbindungsrohrs (6) erlauben oder zwei gebogene Pratzen (32) aufweisen, zwischen welchen sich das Ende des Querverbindungsrohrs (6) justiert.

5. Fahrzeugachse nach einem der Ansprüche 2 bis 4, **dadurch gekennzeichnet, dass** die Querverbindungsrohre (6) Stützen (24) aufweisen, die es erlauben, zwischen diesen Rohren eine Elektromaschine zum Antreiben der Fahrzeugachse aufzunehmen.

6. Fahrzeugachse nach einem der Ansprüche 1 bis 5, **dadurch gekennzeichnet, dass** die Befestigungsträger (8, 10) jeweils zwei gestanzte Bleche, die untereinander angeschweißt sind, aufweisen, die einen Hohlkörper bilden, der von zwei im Wesentlichen horizontalen Ebenen, die die Querschiene bilden, begrenzt ist.

7. Verfahren zum Zusammenfügen einer Fahrzeugachse nach einem der Ansprüche 2 bis 6, **dadurch gekennzeichnet, dass** man die Endunterbaugruppen (2) in einer Schablone derart angeordnet, dass ihr Abstand (L1) präzis justiert wird, indem die Länge der Verbindungsrohre (6) angepasst wird, und die Befestigungsträger (8, 10) seitlich dank des möglichen Quergleitens ihrer Form auf den Endunterbaugruppen zu justieren, und dass man dann die Baugruppe dieser verschiedenen Bauteile schweißt.

8. Kraftfahrzeug, das eine Fahrzeugachse (1, 21) nach einem der Ansprüche 1 bis 6 aufweist.

9. Kraftfahrzeug nach Anspruch 8, **dadurch gekennzeichnet, dass** es eine elektrische Zugmaschine, die in die Fahrzeugachse (1, 21) integriert ist, aufweist.

## Claims

1. A running gear axle fixed to the body of a vehicle, in particular for a motor vehicle, each end of which is constituted by a subassembly (2) receiving a mobile assembly (4) supporting a wheel of this running gear, and supports (8, 10) for fixing to the body of the vehicle, the end subassemblies (2) being connected with one another by transverse linking elements (6), the said axle (1, 21) comprising means permitting the realization from these same end subassemblies (2) different spacings of these subassemblies, and different positionings of the fixing supports (8, 10), **characterized in that** the fixing supports (8, 10) each include a rail which, for their assembly, rests whilst being able to slide transversely, in a corresponding groove (34) of their end subassembly (2).

2. The running gear axle according to claim 1, **characterized in that** the transverse linking elements comprise tubes (6) of adapted length, disposed transversely, which connect the end subassemblies (2).

3. The running gear axle according to claim 2, **characterized in that** each end of the transverse linking tubes (6) of adapted length adjusts itself on an anchoring device (30) integrated to the end subassembly (2), which permits a lateral sliding during assembly.

4. The running gear axle according to claim 3, **characterized in that** each end subassembly (2) comprises front and rear transverse faces (26), which each integrate anchoring devices (30), either permitting a direct adjustment of the end of a transverse linking tube (6), or comprising two curved lugs (32), between which the end of the transverse linking tube (6) adjusts itself.

5. The running gear axle according to any one of claims 2 to 4, **characterized in that** the transverse linking tubes (6) comprise supports (24) permitting an electric machine for powering of the running gear to be received between these tubes.

6. The running gear axle according to one of claims 1 to 5, **characterized in that** the fixing supports (8, 10) each include two stamped sheets welded to one another forming a hollow body limited by two substantially horizontal planes, constituting the transverse rail.

7. An assembly method of a running gear axle according to any one of claims 2 to 6, **characterized in that** the end subassemblies (2) are disposed in a jig so as to adjust precisely their spacing (L1) by adapting the length of the linking tubes (6), and to adjust laterally the fixing supports (8, 10) due to the possible transverse sliding of their form on the end subassemblies, and subsequently **in that** these different components are welded together.

8. A motor vehicle comprising running gear including an axle (1, 21) according to any one of claims 1 to 6.

9. The motor vehicle according to claim 8, **characterized in that** it comprises an electric traction machine integrated in the running gear axle (1, 21).
